# EUROPEAN PATENT APPLICATION

(11) **EP 1 148 361 A2**
(43) Date of publication of application: **24.10.2001**
(21) Application number: 01302298.3
(22) Date of filing: 13.03.2001
(51) Int. Cl.: G02B 6/293, H04B 10/12

(54) **Light-branching apparatus for an optical communications system**

(30) Priority: 13.03.2000 JP 2000069097
(71) Applicant: NEC CORPORATION, Tokyo (JP)
(72) Inventor: Michishita, Yukio, Tokyo (JP)
(74) Representative: Moir, Michael Christopher

(57) **Abstract**

A light-branching apparatus includes an optical splitter (221) and a first wavelength dispersion compensator (114, 222). The optical splitter splits an optical signal for a plurality of channels on a first optical fiber into at least a first optical channel signal on a first channel of a second optical fiber and a plurality of second optical channel signals on a plurality of second channels of a third optical fiber. The first wavelength dispersion compensator is provided for the first channel and compensates wavelength dispersion of the first optical channel signal due to the optical splitter.

## Description

### Background of the Invention

### 1. Field of the Invention

The present invention relates to a light-branching apparatus used in an optical-fiber communication system, and more particularly, to a light-branching apparatus used in an optical-fiber communication system for transmitting optical signals with different wavelengths.

### 2. Description of the Related Art

As the signals to be transmitted increase, an optical-fiber communication system using an optical fiber has been widely used. The index of refraction of the optical fiber, e.g., the optical fiber formed of quartz glass used in such an optical-fiber communication system becomes smaller when the wavelength of light becomes longer. With an optical fiber of quartz glass, when the wavelength becomes longer, the propagation speed becomes faster. On the contrary, when the wavelength becomes shorter, the propagation speed becomes slower. This is called positive wavelength dispersion.

Because of the presence of a dispersion characteristic, when a light pulse of certain wavelength width is input to the optical fiber, the output light pulse has a wider pulse width. As a result, degradation of transmission quality, such as by waveform distortion, is caused. The influence is especially large when the transmission distance, such as with a submerged transmission line, is long. Also, the influence due to the degradation of transmission quality is remarkable when the transmission bit rate is increased. For example, when the bit rate is 10 Gps (giga-bits per second), the time width of one slot is 1/10 Gps or 100 ps. Therefore, it is necessary to reduce the waveform distortion to a value as small as 1/10 or lower than 10 ps. For this purpose, the use of a dispersion-compensation-type optical fiber is conventionally proposed. In a system disclosed in Japanese Laid-Open Patent Application (JP-A-Heisei 9-36814), an optical signal is propagated reciprocally between an erbium-doped optical fiber and the dispersion-compensation-type optical fiber to compensate both wavelength dispersion and propagation loss.

However, in the conventional optical-fiber communication system, specific considerations are not paid to the branch of an optical signal from a main path to a branch path or synthesis of an optical signal from the branch path to the main path, when a light-branching path is provided for a part of the transmission path. That is, when the branch path is provided at part of the transmission path, the length of the transmission path is different between the main path and the branch path. In this case, the effect of the branch compensation is not sufficient.

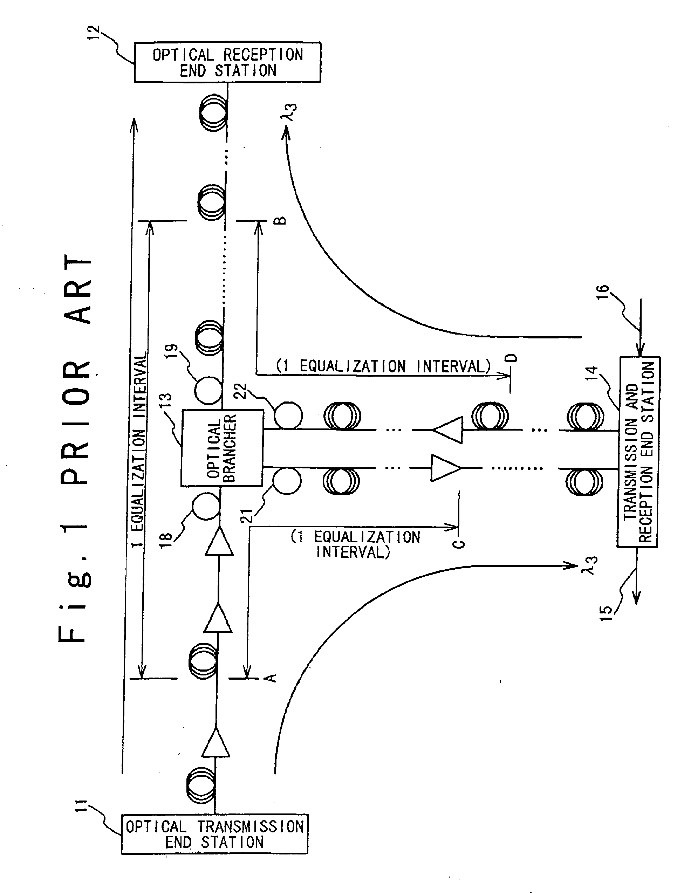

Fig. 1 is a diagram showing an optical-fiber communication system in which a light-branching apparatus is arranged and the wavelength dispersion on the transmission path can be compensated, as a system in which the above problem can be solved. In the optical fiber communication system disclosed in Japanese Laid-Open Patent Application (JP-A-Heisei 9-153859), a light-branching apparatus 13 is interposed between a light transmitter station 11 and a light receiver station 12. An optical signal branched by the light-branching apparatus 13 arrives at a light transmitter/receiver station 14. The light transmitter/receiver station 14 outputs the received optical signal as an output signal 15, and receives an optical transmission signal 16 from an apparatus (not shown) to transfer to the light receiver station 12 via the light branching apparatus 13.

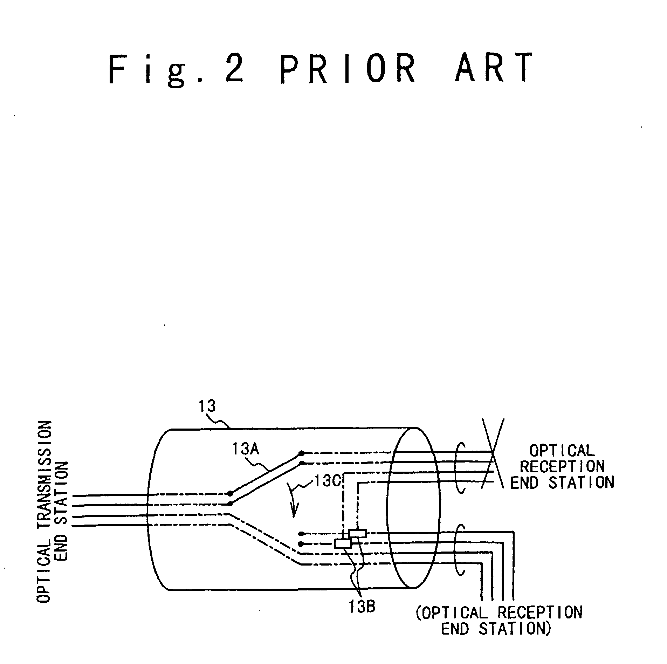

Fig. 2 is a diagram showing the structure of a conventional light-branching apparatus. The light-branching apparatus 13 is composed of an optical switch 13A and a light separating/synthesizing unit 13B. In general, the light-branching apparatus 13 operates to relay communication between the light transmitter station 11 and the light receiver station 12, between the light transmitter station 11 and the light transmitter/receiver station 14, and between the light transmitter/receiver station 14 and the light receiver station 12. If any fault occurs on the transmission path between the light-branching apparatus 13 and the light receiver station 12 as shown by the symbol x, the optical switch 13A switches the transmission path to a standby side as shown by the arrow 13C to ensure communication between the light branching apparatus 13 and the light receiver station 12.

In the conventional optical-fiber communication system, as shown in Fig. 1. it is supposed that a point distanced from a point A by one equalization interval in a direction of the light receiver station 12 via the light-branching apparatus 13 is set to the point B, the distance from the light transmitter station 11 to the point A is set as n equalization intervals (n is an integer greater than zero), and the distance from the point B to the light receiver station 12 is set as m equalization intervals (m is an integer greater than zero). With one equalization interval of the main path, an equalizing fiber 18 is inserted on the input side of the light-branching apparatus 13 to compensate 0.5 times of summed wavelength dispersion expected in the one equalization interval, and an equalizing fiber 19 is inserted on the output side of the light branching apparatus 13 to compensate 0.5 times of summed wavelength dispersion expected in the one equalization interval. In this way, the optical signal is transmitted on the main path from the light transmitter station 11 to the light receiver station 12 while the summed wavelength dispersion for one equalization interval is compensated by the equalizing fibers 18 and 19 during the one equalization interval including the light-branching apparatus 13.

Also, supposing that the distance from the point A on the main path to the point C on a branch path is one equalization interval, an equalizing fiber 21 is inserted on the output stage of the light-branching apparatus 13 to compensate 0.5 times of summed wavelength dispersion expected in the one equalization interval. Supposing that the distance from the point D on an upstream path of the branch path to the point B on the main path is one equalization interval, an equalizing fiber 22 is inserted on the input stage of the light-branching apparatus 13 to compensate 0.5 times of summed wavelength dispersion expected in the one equalization interval.

Accordingly, in the optical-fiber communication system, the accumulated wavelength dispersion from the point A to the point B for the optical signal which is transmitted from the point A to the point B on the main path is compensated by the equalizing fibers 18 and 19 provided intermediately such that the wavelength dispersion is reduced to zero at the point B. Also, the accumulated wavelength dispersion from the point A to the point C for the optical signal which is transmitted from the point A on the main path and branched to the branch path by the light-branching apparatus 13 and transmitted to the point C on the branch path is compensated by the equalizing fibers 18 and 21 provided intermediately such that the wavelength dispersion is reduced to zero at the point C. Further, the accumulated wavelength dispersion from the point D to the point B for the optical signal which is transmitted from the point D on the upstream path of the branch path and branched to the main path by the light-branching apparatus 13 and transmitted to the point B on the main path is compensated by the equalizing fibers 22 and 19 provided intermediately such that the wavelength dispersion is reduced to zero at the point C.

The optical-fiber communication system shown in Fig. 1 has the dispersion equalizing fibers 18, 19, 21, and 22 arranged to sandwich the light-branching apparatus 13. The dispersion equalizing fibers 18, 19 21, and 22 are optical fibers having characteristics for compensation of the wavelength dispersion, and the characteristic is adjusted based on the length of the fiber. Accordingly, the amount of dispersion in the system is predetermined. When the transmission path length is changed, its resultant wavelength dispersion is also changed. Thus, transmission path length is different based on the length of each of the equalizing fibers 18, 19, 21, and 22.

Also, in order to prevent unbalance in the length, the equalizing fibers 18, 19, 21, and 22 are arranged to sandwich the light branching apparatus 13 and to have a compensation amount by 0.5 times. In this way, the number of fibers to be prepared are many such as the equalizing fibers 18, 19, 21, and 22, their installation at the site may be a troublesome, time-consuming task as well as the number of overall components being increased.

### Summary of the Invention

Therefore, an object of the preferred embodiments of the present invention is to provide a light-branching apparatus which requires no specific work for compensating wavelength dispersion when being installed at a part of a transmission path, and an optical communication system using the same.

In an aspect of the present invention, a light branching apparatus includes an optical splitter and a first wavelength dispersion compensator. The optical splitter splits an optical signal for a plurality of channels on a first optical fiber into at least a first optical channel signal on a first channel of a second optical fiber and a plurality of second optical channel signals on a plurality of second channels of a third optical fiber. The first wavelength dispersion compensator is provided for the first channel,and compensates wavelength dispersion of the first optical channel signal due to the optical splitter.

Here, the light-branching apparatus may further include a second wavelength dispersion compensator which is provided for the plurality of second channels and compensates wavelength dispersion of the plurality of second optical channel signals due to the optical splitter.

Also, the first wavelength dispersion compensator may compensate wavelength dispersion of the first optical channel signal due to the second optical fiber, in addition to the wavelength dispersion of the first optical channel signal due to the optical splitter. In this case, the first wavelength dispersion compensator may compensate the wavelength dispersion of the first optical channel signal due to the second optical fiber by difference in length between the second optical fiber and the third optical fiber on which the first optical channel signal is selectively propagated. Also, the light-branching apparatus may further include an optical switch which switches a channel from one of the plurality of second channels to the first channel.

Also, the light-branching apparatus may further include the third wavelength dispersion compensator which is provided for the first channel and compensates wavelength dispersion of the first optical channel signal due to the second optical fiber.

Also, the light-branching apparatus may further include the fourth wavelength dispersion compensator which is provided for a third channel of the second optical fiber and compensates wavelength dispersion of a third optical channel signal inputted to the light-branching apparatus due to the second optical fiber.

Also, when the plurality of optical channel signals are compensated in units of channels, the first wavelength dispersion compensator may include at least a first wavelength dispersion compensating element for the channel of the first optical channel signal.

In another aspect of the present invention, an optical communication system includes a first optical fiber connected to a first station, a second optical fiber connected to a second station, a third optical fiber connected to a third station, and a light-branching apparatus. The light-branching apparatus includes an optical splitter and a first wavelength dispersion compensator. The optical splitter splits an optical signal for a plurality of channels on a first optical fiber into at least a first optical channel signal on a first channel of a second optical fiber and a plurality of second optical channel signals on a plurality of second channels of a third optical fiber. The first wavelength dispersion compensator is provided for the first channel and compensates wavelength dispersion of the first optical channel signal due to the optical splitter.

Here, the light-branching apparatus may further include a second wavelength dispersion compensator which is provided for the plurality of second channels and compensates wavelength dispersion of the plurality of second optical channel signals due to the optical splitter.

Also, the first wavelength dispersion compensator may compensate wavelength dispersion of the first optical channel signal due to the second optical fiber, in addition to the wavelength dispersion of the first optical channel signal due to the optical splitter. In this case, the first wavelength dispersion compensator may compensate the wavelength dispersion of the first optical channel signal due to the second optical fiber by difference in length between the second optical fiber and the third optical fiber on which the first optical channel signal is selectively propagated. Also, the light-branching apparatus may further include an optical switch which switches a channel from one of the plurality of second channels to the first channel.

Also, the light-branching apparatus may further include the third wavelength dispersion compensator which is provided for the first channel and compensates wavelength dispersion of the first optical channel signal due to the second optical fiber.

Also, the light branching apparatus may further include the fourth wavelength dispersion compensator which is provided for a third channel of the second optical fiber and compensates wavelength dispersion of a third optical channel signal inputted to the light-branching apparatus due to the second optical fiber.

Also, when the plurality of optical channel signals are compensated in units of channels, the first wavelength dispersion compensator may include at least a first wavelength dispersion compensating element for the channel of the first optical channel signal.

In still another aspect of the present invention, a light-branching apparatus includes an optical switch and a wavelength dispersion compensator. The optical switch switches a transmission channel of a first optical channel signal on a first optical fiber from a first channel on a second optical fiber to a second channel on a third optical fiber. The wavelength dispersion compensator compensates wavelength dispersion of the first optical channel signal due to the second optical fiber by a difference in length between the second optical fiber and the third optical fiber.

In yet still another aspect of the present invention, a light-branching apparatus includes an optical splitter and a first wavelength dispersion compensator. The optical splitter splits at least a first optical channel signal from an optical signal for a plurality of channels on a first optical fiber to transmit onto a first channel of a second optical fiber. The first wavelength dispersion compensator is provided for the first channel and compensates wavelength dispersion of the first optical channel signal due to the second optical fiber. Also, the light branching apparatus may further include a second wavelength dispersion compensator which is provided for a second channel of the second optical fiber, and compensates wavelength dispersion of a second optical channel signal supplied on the second channel due to the second optical fiber.

### Brief Description of the Drawings

Preferred features of the present invention will now be described, by way of example only, with reference to the accompanying drawings, in which:-
Fig. 1 is a block diagram showing the structure of a main portion of a conventional optical fiber communication system;
Fig. 2 is a block diagram showing the structure of a main portion of a conventional light-branching apparatus;
Fig. 3 is a block diagram showing the system configuration of an optical fiber communication system using a light-branching apparatus according to a first embodiment of the present invention;
Fig. 4 is a diagram schematically showing the structure of the light branching apparatus in the first embodiment;
Fig. 5 is a diagram showing the characteristics of the wavelength dispersion of two typical wavelengths in the optical fiber communication system in the first embodiment;
Fig. 6 is a diagram showing the state when the compensation of the optical signal is carried out finally in an end station such as the first optical signal receiver end station in the optical fiber communication system in the first embodiment;
Fig. 7 is a diagram showing the waveform of an optical signal on a channel before the wavelength dispersion compensation;
Fig. 8 is a diagram showing the waveform of the optical signal on the channel after the wavelength dispersion compensation;
Fig. 9 is a block diagram showing the structure of the optical fiber communication system using the light branching apparatus according to a second embodiment of the present invention; and
Fig. 10 is a block diagram showing the structure of the optical fiber communication system using the light-branching apparatus according to a third embodiment of the present invention.

### Description of the Preferred Embodiments

Hereinafter, a light-branching apparatus of the present invention will be described below in detail with reference to the attached drawings.

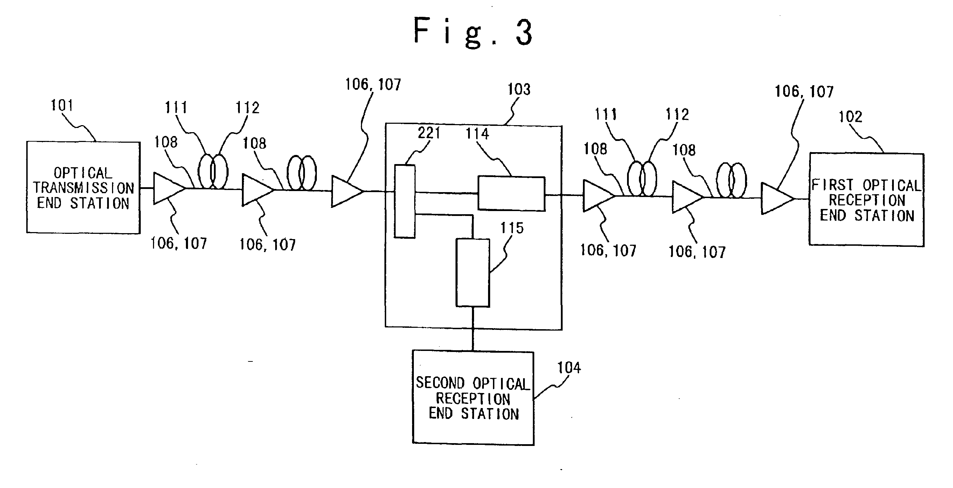

Fig. 3 is a diagram schematically showing an optical fiber communication system using the light-branching apparatus according to the first embodiment of the present invention. In the system of this embodiment, the light-branching apparatus 103 is arranged in an intermediate location on a main transmission path between a light transmitter station 101 and a first light receiver station 102. A branched optical signal is received by a second light receiver station 104. A number of repeaters 107. each including an optical amplifier 106, are arranged in a predetermined interval between the light transmitter station 101 and the light-branching apparatus 103. Provided on each transmission path 108 between the two adjacent repeaters 107 are a dispersion shift fiber (DSF) 111 and dispersion compensate fiber (DCF) 112 which has a characteristic opposite to that of the DSF 111 to compensate the wavelength dispersion. Also, the arrangement is provided between the lightbranching apparatus 103 and the first light receiver station 102. Also, a combination of repeaters 107, DSFs 111, and DCFs 112 (not shown) is arranged on the transmission path between the light-branching apparatus 103 and the second light receiver station 104, when the transmission path path extends beyond a certain length.

The light-branching apparatus 103 is composed of a wavelength dispersion compensator 114 for the main transmission path and another wavelength dispersion compensator for a sub-transmission path. In this way, in the optical fiber communication system of this embodiment, the light-branching apparatus 103 is characterized by the two wavelength dispersion compensators 114 and 115 provided therein. Therefore, a worker is needed only to simply install the light branching apparatus 103 in a desired position on the transmission path.

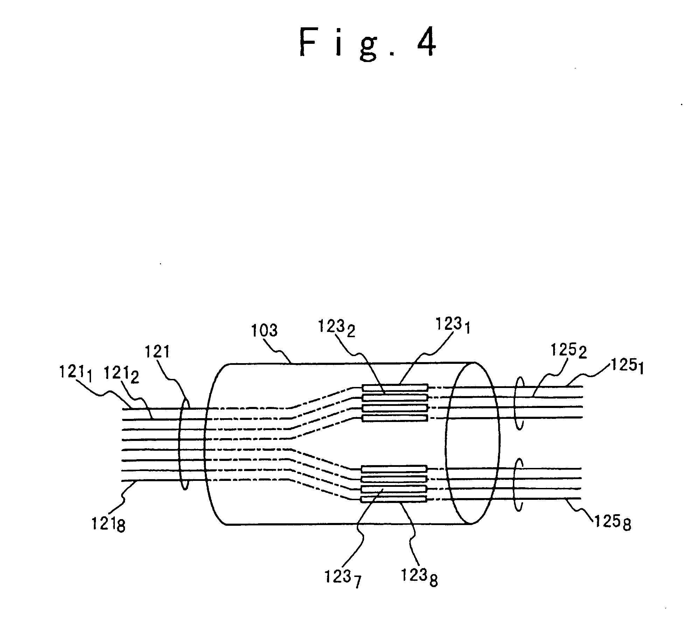

Fig. 4 is a diagram schematically showing the structure of the light-branching apparatus of this embodiment. The light-branching apparatus 103 has eight dispersion compensator circuits 122₁ to 122₈ provided for first to eighth branch paths 123₁ to 123₈ which are separated for every wavelength range of an optical fiber 121. In this example, the dispersion compensator circuits 122₁ to 122₄ correspond to the dispersion compensator 114 and the dispersion compensator circuits 122₅ to 122₈ correspond to the dispersion compensator 114 in Fig. 3. The dispersion compensator circuits 123₁ to 123₈ can compensate the wavelength dispersion at once on all the wavelength ranges to be transferred through the light-branching apparatus 103. Commercially-available circuit elements, which are different in compensation amount but identical in size, can be used as the dispersion compensator circuits 123₁ to 123₈. Therefore, the dispersion compensator circuits 123₁ to 123₈ are selected and used to have the compensation characteristic determined in accordance with the dispersion amount determined based on the size or other property of the light-branching apparatus 103 using an optical signal of a predetermined wavelength as a reference. In this embodiment, the branch paths 125₁ to 125₄ through the dispersion compensator circuits 123₁ to 123₄ are connected on the main transmission path to the first light receiver station 102, and the branch paths 125₅ to 125₈ through the dispersion compensator circuits 123₅ to 123₈ are connected on the sub-transmission path to the second light receiver station 104.

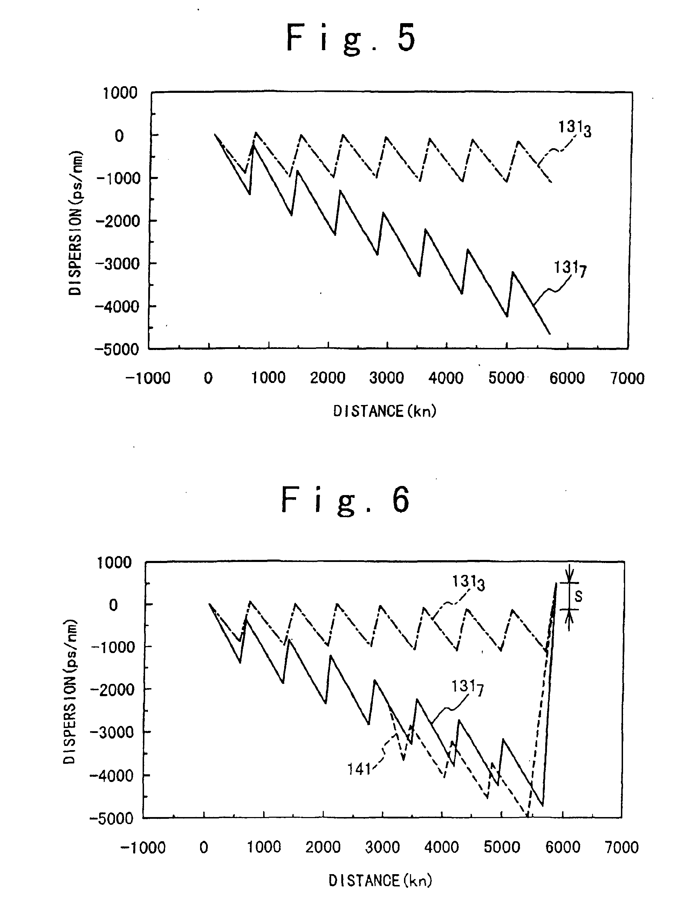

Fig. 5 is a diagram showing a profile of the wavelength dispersion in two typical wavelengths in the optical fiber communication system of this embodiment. In the diagram, the horizontal axis represents the distance (km) from the light transmitter station 101 shown in Fig. 3 and the vertical axis represents the wavelength dispersion. The wavelength dispersion is not caused at the time when an optical signal is outputted from the light transmitter station 101, but the wavelength dispersion increases as the distance increases.

As shown in Fig. 5, the wavelength dispersion is compensated by the DCFs 112 and the wavelength dispersion compensators 114 and 115 not only in the light-branching apparatus 103 but also on the transmission path 108. Fig. 5 shows the state in which the compensation is carried out to cancel the wavelength dispersion of the optical signal in a third channel 131₃ of a predetermined wavelength. In the figure, the wavelength dispersion is shown in a sawtooth shape and the compensation is repeated. This is because the compensation by the DCFs 112 is carried out to the intervals of the transmission path. In this way, the compensation is carried out to each interval, compared with the conventional case where the compensation is carried out once at the end of the transmission path. Therefore, the distortion of the waveform of the pulse optical signal can significantly be corrected in the waveform so that reproduction errors can be reduced.

Also, as shown in Fig. 5, the optical signal on a seventh channel 131₇ is sequentially compensated along the transmission path. In this case, the compensation by the DCFs 112 and the wavelength dispersion compensators 114 and 115 is carried out uniformly to all the wavelength ranges. As a result, the dispersion amount becomes gradually greater as the transmission distance increases.

Fig. 6 shows the state in which the compensation of the optical signal is carried out finally at the end station such as the first light receiver station 102 in the optical fiber communication system. As described above, the compensation of the wavelength dispersion of the optical signal is not carried out for every wavelength range between the light transmitter station 101 and the first 102 or second light receiver station 104 shown in Fig. 3. Therefore, the final dispersion compensation is carried out at both the first and second light receiver stations 102 and 104.

A characteristic curve 141 shown by the broken line in Fig. 6 represent the compensation in the seven channel of an optical signal in a conventional light-branching apparatus instead of the light-branching apparatus 103 of this embodiment. In the first and second light receiver stations 102 and 104, the wavelength dispersion of the optical signal for every wavelength range is compensated before their reproduction. However, when the conventional light branching apparatus is used, the wavelength dispersion is excessively caused by dispersion by the conventional light-branching apparatus, compared with when the light branching apparatus 103 of the embodiment is used. For this reason, in this example, the compensation for an amount shown by S in the figure is short at the second light receiver station 104. On the contrary, in case of the optical signal 131₇ on the seventh channel shown by the solid line in this embodiment, the compensation is completely and fully carried out to the entire wavelength ranges in the second light receiver station 104 regardless of whether the light branching apparatus 103 is arranged.

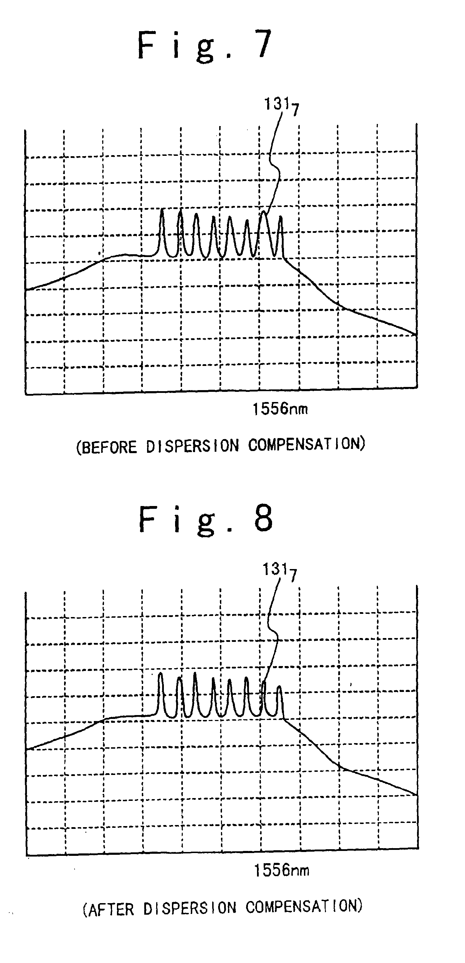

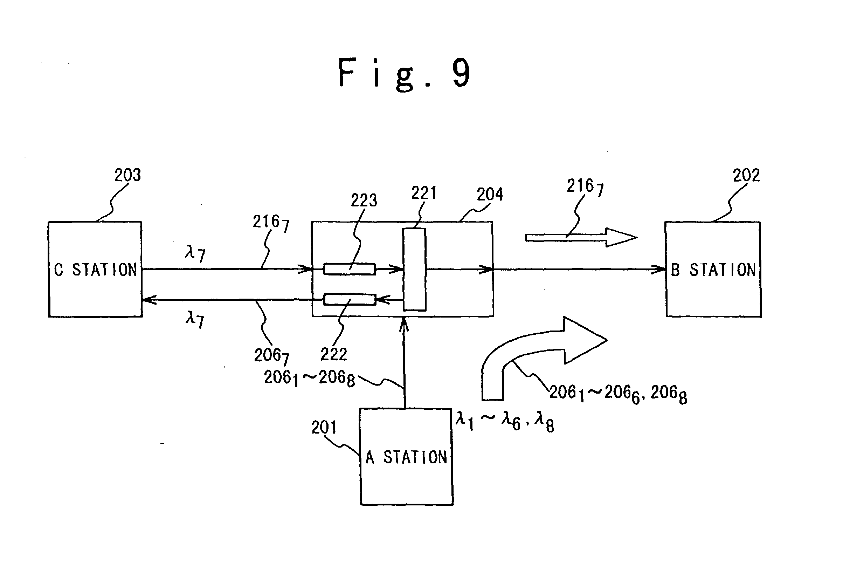

Fig. 7 shows the waveform of each of optical signals on channels before the dispersion compensation, while Fig. 8 shows the waveform of the optical signal on the channel after the dispersion compensation. As shown in Fig. 7, the waveform of the optical signal 131₇ on the seventh channel is distorted by wavelength dispersion. As shown in Fig. 8, the waveform of the optical signal 131₇ on the seventh channel is compensated by the light-branching apparatus 103. It is apparent that the optical signal 131₇ of the seventh channel is successfully compensated and can be reproduced without any error.

Fig. 9 shows the optical-fiber communication system using the light-branching apparatus according to the second embodiment of the present invention. In the optical-fiber communication system, the light-branching apparatus 204 is arranged at an intermediate location between an A station 201 and a B station 202. The A station 201 transmits the optical signals 206₁ to 206₈ having different wavelengths λ₁ to λ₈ for the first to eighth channels, respectively. The optical signal 206₇ having the wavelength λ₇ on the seventh channel is branched to a C station 203 by the light branching apparatus 204, while the remaining optical signals are transferred to the B station 202. The C station 203 transmits an optical signal 216₇ having the wavelength λ₇ on the seventh channel to the light-branching apparatus 204. The light-branching apparatus 204 combines the optical signal 216₇ transmitted from the C station 203 with the optical signals 206₁ to 206₆ and 206₈ transmitted from the A station 201 and transfers a combined signal to the B station 202.

In the optical-fiber communication system of this embodiment, the optical signals 206₇ and 216₇ on the seventh channel, which is branched to the C station 203 by the light-branching apparatus 204, has a propagation distance to the B station 202 twice as long as the other optical signals 206₁ to 206₆ and 206₈, i.e twice the distance between the light branching apparatus 204 and the C station 203. Accordingly, in this embodiment, the light-branching apparatus 204 includes an optical splitter/combiner 221 and two wavelength dispersion compensators 222 and 223 for the two optical signals 206₇ and 216₇ on the seventh channel. That is, when the propagation distance of an optical signal on a channel is longer than those of other optical signals, the wavelength dispersion corresponding to the longer propagation distance is compensated in the light-branching apparatus 204.

It should be noted that the wavelength dispersion compensators 222 and 223 may have the functions to compensate the wavelength dispersion due to the light branching apparatus 204 in the first embodiment, and to compensate the wavelength dispersion due to the optical fiber described above. Instead, the wavelength dispersion compensators 222 and 223 may be provided in the light-branching apparatus in addition to the wavelength dispersion compensators 114 and 115.

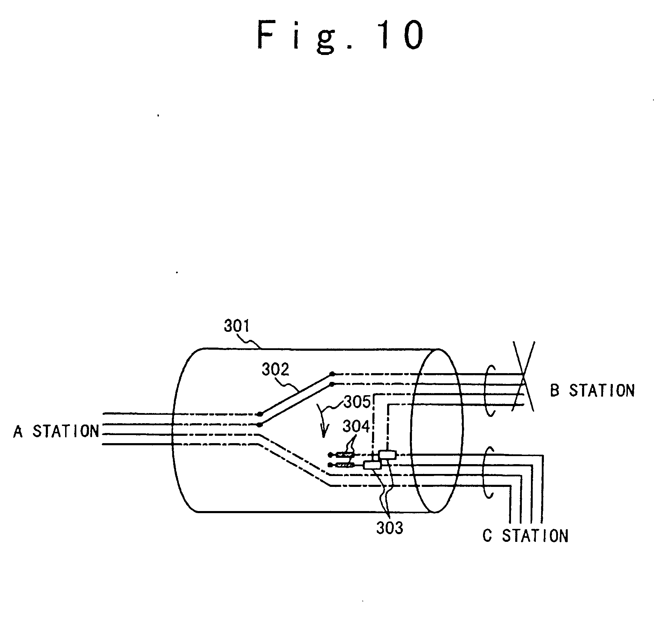

Fig. 10 shows the light-branching apparatus according to the third embodiment of the present invention. The light branching apparatus 301 includes therein an optical switch 302, a set of optical splitter/combiner 303, and a set of wavelength dispersion compensators 304. The optical switch 302 is provided to switch between a transmission path between the A station and the B station and a transmission path between the A station and the C station. The optical splitter/combiner 303 splits an optical signal and combines optical signals on the transmission path between the station A or B and the station C. The wavelength dispersion compensators 304 are provided on transmission paths on which optical signals are transferred when a fault has occurred on the transmission paths between the light-branching apparatus 301 and the B station (as shown by the symbol X) and the optical switch 302 switches the transmission paths. The wavelength dispersion compensators 304 are provided in the light-branching apparatus 301 to compensate the wavelength dispersion due to the change in length of the transmission paths when the transmission paths are switched due to the fault.

In the third embodiment, the wavelength dispersion compensators in the first or second embodiment may be added.

It should be noted that the first to third embodiments may be combined or independently realized.

As set forth above, according to the invention, the light-branching apparatus of the present invention includes the wavelength dispersion compensators built in the light-branching apparatus to compensate the wavelength dispersion due to the light-branching apparatus. Therefore, even if the light-branching apparatus is simply arranged at an intermediate location on the transmission path, there is no change in the wavelength dispersion of the optical signal to be transmitted to one end station. As a result, it is not necessary to change a circuit section of the end station for compensating the wavelength dispersion so that the existing fabrications can be used.

Also, according to the present invention, the light-branching apparatus of the present invention has a set of the wavelength dispersion compensators provided therein to compensate wavelength dispersion of the optical signal in a specific wavelength range due to a portion of the external transmission path. Therefore, the wavelength dispersion of the whole transmission path can be compensated by simply arranging the light-branching apparatus on the transmission path.

Further, according to the present invention, the light-branching apparatus of the present invention has the wavelength dispersion compensator arranged to compensate the wavelength dispersion due to the change of the transmission path in the length when the transmission path is switched by the optical switch in the light branching apparatus. Therefore, even when the transmission path is switched, the compensation of the wavelength dispersion is not required to be carried out outside the light branching apparatus. As a result, the quality of the optical signal can be maintained even if the optical switch is operated on any fault.

Also, according to the present invention, in the light branching apparatus of the present invention, the wavelength dispersion compensators are detachable. Therefore, the wavelength dispersion amount can be freely adjusted in accordance with the length of the transmission path.

Further, according to the present invention, in the light branching apparatus, the wavelength dispersion compensators are provided for each branch path. Therefore, the wavelength dispersion can be separately compensated for every branch path.

While the present invention has been described in its preferred embodiments, it is to be understood that the words which have been used are words of description rather than limitation, and that changes may be made to the invention without departing from its scope as defined by the appended claims.

Each feature disclosed in this specification (which term includes the claims) and/or shown in the drawings may be incorporated in the invention independently of other disclosed and/or illustrated features. Reference numerals appearing in the claims are by way of illustration only and should be disregarded when interpreting the scope of the claims.

The text of the abstract filed herewith is repeated here as part of the specification.

A light-branching apparatus includes an optical splitter (221) and a first wavelength dispersion compensator (114, 222). The optical splitter splits an optical signal for a plurality of channels on a first optical fiber into at least a first optical channel signal on a first channel of a second optical fiber and a plurality of second optical channel signals on a plurality of second channels of a third optical fiber. The first wavelength dispersion compensator is provided for the first channel and compensates wavelength dispersion of the first optical channel signal due to the optical splitter.

## Claims

1. A light branching apparatus, comprising:
an optical splitter (221) which splits an optical signal for a plurality of channels on a first optical fiber into at least a first optical channel signal on a first channel of a second optical fiber and a plurality of second optical channel signals on a plurality of second channels of a third optical fiber; and
a first wavelength dispersion compensator (114, 222) which is provided for said first channel and compensates wavelength dispersion of said first optical channel signal due to said optical splitter.

2. The light branching apparatus according to claim 1, further comprising:
a second wavelength dispersion compensator (115) which is provided for said plurality of second channels and compensates wavelength dispersion of said plurality of second optical channel signals due to said optical splitter.

3. The light,branching apparatus according to claim 1 or 2, wherein said first wavelength dispersion compensator compensates wavelength dispersion of said first optical channel signal due to said second optical fiber, in addition to said wavelength dispersion of said first optical channel signal due to said optical splitter.

4. The light branching apparatus according to claim 3, wherein said first wavelength dispersion compensator compensates said wavelength dispersion of said *first* optical channel signal due to said second optical fiber by a difference in length between said second optical fiber and said third optical fiber on which said first optical channel signal is selectively propagated.

5. The light branching apparatus according to claim 4, further comprising:
an optical switch (302) which switches a channel from one of said plurality of second channels to said first channel.

6. The light branching apparatus according to claim 1 or 2, further comprising:
a third wavelength dispersion compensator (222, 304) which is provided for said first channel and compensates wavelength dispersion of said first optical channel signal due to said second optical fiber.

7. The light branching apparatus according to any of claims 1 to 6, further comprising:
a fourth wavelength dispersion compensator (223) which is provided for a third channel of said second optical fiber and compensates wavelength dispersion of a third optical channel signal inputted to said light branching apparatus due to said second optical fiber.

8. The light branching apparatus according to any of claims 1 to 7, wherein said plurality of optical channel signals are compensated in units of channels, and said first wavelength dispersion compensator includes at least a first wavelength dispersion compensating element (123) for the channel of said first optical channel signal.

9. An optical communication system using said light branching apparatus according to any one of claims 1 to 8.
